# EUROPÄISCHE PATENTANMELDUNG

(11) **EP 1 391 824 A2**
(43) Veröffentlichungstag der Anmeldung: **25.02.2004**
(21) Anmeldenummer: 03018250.5
(22) Anmeldetag: 11.08.2003
(51) Int. Cl.: G06F 11/34

(54) **Verfahren zur Messung der Nettolaufzeit eines Datenverarbeitungsprogramms**

(30) Priorität: 22.08.2002 DE 10238575
(71) Anmelder: SIEMENS AKTIENGESELLSCHAFT, 80333 München (DE)
(72) Erfinder: Hofmann, Klaus-Peter, 91086 Aurachtal-Münchaurach (DE)

(57) **Zusammenfassung**

Ein Verfahren zur Messung der Nettolaufzeit (RT1) eines Programms (T1) einer Datenverarbeitungsanlage, in welcher eine Systemzeit (ST) messbar ist, umfasst folgende Schritte:
a) Als Nettolaufzeit (RT1) des Programms (T1) wird der Wert null gespeichert.
b) Bei Start bzw. Fortführung des Programms (T1) wird die Systemzeit (ST) als Startzeit (SZ) des Programms (T1) gespeichert.
c) Bei Unterbrechung bzw. Abschluss des Programms (T1) wird die Differenz zwischen Systemzeit (ST) und gespeicherter Startzeit (SZ) zur Nettolaufzeit (RT1) addiert.
d) Wiederholung der Schritte b) und c) bis zum Abschluss des Programms (T1).

## Beschreibung

Die Erfindung betrifft ein Verfahren zur Messung der Nettolaufzeit eines Programms einer Datenverarbeitungsanlage.

Ein Datenverarbeitungsprogramm, welches eine Bruttolaufzeitmessung sowie eine Nettolaufzeitmessung eines Programms ermöglicht, ist beispielsweise aus der DE 40 29 104 A1 bekannt. Unter der Bruttolaufzeit wird hierbei die Laufzeit des Programms einschließlich zugehöriger Unterprogramme verstanden. Die Nettolaufzeit bezieht sich dagegen auf die Laufzeit des Hauptprogramms ohne Unterprogramme. Bei der Brutto- und Nettolaufzeitmessung wird dabei davon ausgegangen, dass während der gesamten Laufzeit des Programms stets entweder das Hauptprogramm oder eines der Unterprogramme abläuft. Unterbrechungen während des Programmablaufs sind nicht vorgesehen.

Der Erfindung liegt die Aufgabe zugrunde, ein unter variablen Betriebsmodi einer Datenverarbeitungsanlage einsetzbares und aussagekräftiges Verfahren zur Messung der Nettolaufzeit eines Programms der Datenverarbeitungsanlage anzugeben.

Diese Aufgabe wird erfindungsgemäß gelöst durch ein Verfahren mit den Merkmalen des Anspruchs 1. Hierbei wird die Nettolaufzeit eines Programms einer Datenverarbeitungslage, in welcher eine Systemzeit messbar ist, mit folgenden Schritten ermittelt:
a) Als Nettolaufzeit des Programms wird der Wert null gespeichert,
b) bei Start bzw. Fortführung des Programms wird die Systemzeit als Startzeit des Programms gespeichert,
c) bei Unterbrechung bzw. Abschluss des Programms wird die Differenz zwischen Systemzeit und gespeicherter Startzeit zur Nettolaufzeit addiert und
d) Wiederholung der Schritte b) und c) bis zum Abschluss des Programms.

Das Verfahren ist nutzbar bei einer Datenverarbeitungsanlage, welche das Auslesen der absoluten Zeit, der so genannten Systemzeit durch ein Programm vorsieht. Unter der Nettolaufzeit des Programms wird die reine Bearbeitungs- oder Rechenzeit ohne Unterbrechungen oder zwischengeschaltete Bearbeitungen anderer Programme verstanden. Inwieweit unter dem Begriff "Programm" auch Unterprogramme subsumiert sind, kann vom Benutzer festgelegt werden oder für das Verfahren einheitlich vorgegeben sein. Beispielsweise können in die Nettolaufzeitmessung stets sämtliche dem Programm zugeordnete Unterprogramme einbezogen werden. Im Gegensatz hierzu wird unter Bruttolaufzeit der gesamte zur Abarbeitung des Programms erforderliche Zeitbedarf verstanden, d.h. die Differenz zwischen der Systemzeit bei Abschluss des Programms und der Systemzeit bei Start des Programms. In der Bruttolaufzeit können somit auch Zeitintervalle enthalten sein, in welchen die Bearbeitung des Programms gestoppt ist und beispielsweise ein zweites Programm abgearbeitet wird. Eine Bruttolaufzeitmessung kann parallel zur Nettolaufzeitmessung durchgeführt werden.

Vorzugsweise wird eine Nettolaufzeit eines während Unterbrechungen des Programms ablaufenden zweiten Programms ebenfalls gemessen. Analog ist eine Nettolaufzeitmessung bei einer beliebigen Anzahl weiterer Programme möglich, deren Bruttolaufzeiten sich in beliebiger Weise überschneiden.

Nach einer bevorzugten Weiterbildung wird die Nettolaufzeit eines zweiten Programms, welches während einer Unterbrechung des Programms, d.h. innerhalb der Bruttolaufzeit des Programms abläuft, gemessen und vorzugsweise durch das Programm gespeichert. Hierbei hat vorzugsweise das zweite Programm eine höhere Priorität als das erste, durch den Ablauf des zweiten Programms unterbrochene Programm. Hierdurch ist auf einfache Weise feststellbar, inwieweit der Ablauf eines Programms durch ein zweites Programm, welches höher prior als das erste Programm ist, unterbrochen wird.

Alternativ kann auch das erste Programm eine höhere Priorität als das zweite Programm aufweisen, beispielsweise wenn das erste Programm ein Betriebsmittel belegen will (Semaphore), das bereits vom zweiten Programm belegt ist.

Die Speicherung der Nettolaufzeit eines Programms in einem weiteren Programm einer anderen Prioritätsebene ist analog auf eine höhere Anzahl an Programmen und/oder Prioritätsebenen ausdehnbar.

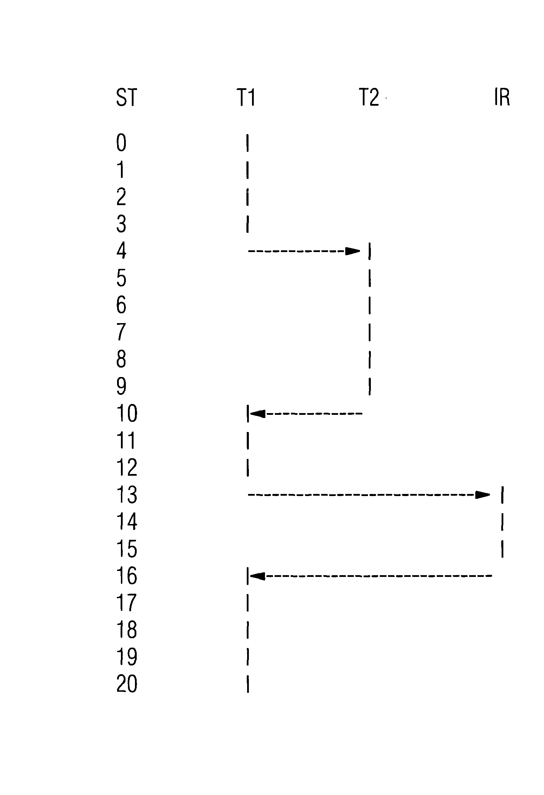

Nachfolgend wird ein Ausführungsbeispiel der Erfindung anhand einer Zeichnung näher erläutert. Hierin zeigt die einzige Figur schematisch den Ablauf zweier Programme einer Datenverarbeitungsanlage.

Die Datenverarbeitungsanlage ermöglicht die Messung der absoluten Zeit oder Systemzeit ST, beispielsweise mit einer Auflösung im Millisekunden- oder Mikrosekundenbereich. Ein erstes Programm oder Task T1 sowie ein zweites Programm oder Task T2 werden zwischen der Systemzeit ST = 0 und der Systemzeit ST = 20 abgearbeitet. Beide Programme T1,T2 sind so genannte Anwenderprogramme, wobei das zweite Programm T2 einen Mailversand durch die Datenverarbeitungsanlage betrifft. Das zweite Programm T2 hat eine höhere Priorität als das Programm T1, d.h. der Ablauf des Programms T1 wird durch den Mailversand unterbrochen.

Zur absoluten Zeit ST = 0 beginnt der Ablauf des Programms T1. Hierbei ist eine Laufzeit oder Nettolaufzeit RT1 des Programms T1 auf null gesetzt. Gleichzeitig wird als Startzeit SZ die aktuelle Systemzeit ST = 0 gespeichert. Das Programm T1 läuft zunächst bis zur Systemzeit ST = 4 und wird zu diesem Zeitpunkt durch das höher priore zweite Programm T2 verdrängt. Die Systemzeit ST = 4 beim Umschalten zwischen dem Programm T1 und dem zweiten Programm T2 wird zum einen zur Ermittlung der Laufzeit RT1 des Programms T1 genutzt. Hierbei wird zum gespeicherten Wert der Laufzeit RT1 des Programms 1, in diesem Fall also dem Wert null, die Differenz aus der aktuellen Systemzeit ST und der gespeicherten Startzeit SZ addiert. Damit ergibt sich zur absoluten Zeit ST = 4 eine Laufzeit RT1 des Programms T1 von 4 (relative Einheiten). Zum anderen wird die aktuelle Systemzeit ST = 4 als neue Startzeit SZ, in diesem Fall des zweiten Programms T2, gespeichert. Da im Ausführungsbeispiel stets nur ein einziges Programm gleichzeitig abläuft, genügt es, die Möglichkeit der Speicherung lediglich einer einzigen Startzeit SZ vorzusehen.

Die Laufzeit RT2 des zweiten Programms T2 wird bei dessen Start, d.h. zur Systemzeit SZ = 4 auf null gesetzt. Das zweite Programm T2 läuft ohne Unterbrechung bis zur Systemzeit ST = 10 und ist zu diesem Zeitpunkt vollständig abgearbeitet, d.h. der Mailversand ist durchgeführt. Bei der Systemzeit ST = 10 wird die Laufzeit RT2 des zweiten Programms T2 ermittelt. Die Laufzeit RT2 ergibt sich, da das gesamte zweite Programm T2 ohne Unterbrechung während eines einzigen Zeitintervalls abgelaufen ist, aus der Differenz zwischen der aktuellen Systemzeit ST = 10 und der gespeicherten Startzeit SZ = 4.

An den Abschluss des zweiten Programms T2 zur Systemzeit ST = 10 schließt sich direkt die Fortführung des ersten Programms T1 an. Die Systemzeit ST = 10 wird als Startzeit SZ gespeichert. Als Laufzeit RT1 des Programms T1 ist weiterhin der Wert 4 gespeichert. Das Programm T1 wird zur Systemzeit ST = 13 unterbrochen durch einen Interrupt IR. Die Systemzeit ST = 13 zum Zeitpunkt des Interrupts IR wird herangezogen zur erneuten Berechnung der Laufzeit RT1 des Programms T1. Zur zuvor gespeicherten Laufzeit RT1 = 4 wird die Differenz zwischen aktueller Systemzeit ST = 13 und zuletzt gespeicherter Startzeit SZ = 10 addiert. Damit ergibt sich eine neue gespeicherte Laufzeit RT1 = 7. Der Interrupt IR dauert an bis zur Systemzeit ST = 16. Zu diesem Zeitpunkt wird die Bearbeitung des Programms T1 fortgeführt. Die Systemzeit ST = 16 wird als neue Startzeit SZ gespeichert und ersetzt die zuvor gespeicherte Startzeit SZ = 10. Das Programm T1 wird im Weiteren ohne Unterbrechung fortgeführt und zur Systemzeit ST = 20 abgeschlossen. Die Laufzeit oder Nettolaufzeit RT1 des Programms T1 beträgt damit insgesamt 11. Die Bruttolaufzeit des Programms T1, welche sich aus der Differenz zwischen der Systemzeit ST = 20 bei Abschluss des Programms T1 und der Systemzeit ST = 0 bei Start des Programms ergibt, ist damit zu 55% von der Nettolaufzeit RT1 des Programms T1 ausgefüllt.

## Patentansprüche

1. Verfahren zur Messung der Nettolaufzeit (RT1) eines Programms (T1) einer Datenverarbeitungsanlage, in welcher eine Systemzeit (ST) messbar ist, mit folgenden Schritten:
a) Als Nettolaufzeit (RT1) des Programms (T1) wird der Wert null gespeichert,
b) bei Start bzw. Fortführung des Programms (T1) wird die Systemzeit (ST) als Startzeit (SZ) des Programms (T1) gespeichert,
c) bei Unterbrechung bzw. Abschluss des Programms (T1) wird die Differenz zwischen Systemzeit (ST) und gespeicherter Startzeit (SZ) zur Nettolaufzeit (RT1) addiert und
d) Wiederholung der Schritte b) und c) bis zum Abschluss des Programms (T1).

2. Verfahren nach Anspruch 1, **dadurch gekennzeichnet, dass** bei Unterbrechung des Programms (T1) eine Nettolaufzeit (RT2) eines während der Unterbrechung ablaufenden zweiten Programms (T2) gemessen wird.

3. Verfahren nach Anspruch 2, **dadurch gekennzeichnet, dass** das Programm (T1) die Nettolaufzeit (RT2) des zweiten Programms (T2) speichert.

4. Verfahren nach Anspruch 3, **dadurch gekennzeichnet, dass** das Programm (T1) eine niedrigere Priorität als das zweite Programm (T2) hat.
